# EUROPEAN PATENT APPLICATION

(11) **EP 4 822 637 A1**
(43) Date of publication of application: **14.10.2026**
(21) Application number: 26165708.4
(22) Date of filing: 18.03.2026
(51) Int. Cl.: G06T 3/4007, G06T 5/20

(54) **FOVEATED UPSCALING**

(30) Priority: 28.03.2025 US 202563779771 P; 13.03.2026 US 202619565747
(71) Applicant: Apple Inc., Cupertino, CA 95014 (US)
(72) Inventor: McCOMBE, James A., Cupertino, 95014 (US); MOORE, Christian I., Cupertino, 95014 (US); CHEUNG, Joseph, Cupertino, 95014 (US); PILLANS, Luke A., Cupertino, 95014 (US); BEGEMAN, Nathaniel C., Cupertino, 95014 (US); MIRHOSSEINI, Seyedkoosha, Cupertino, 95014 (US); FORTIN-DESCHENES, Simon, Cupertino, 95014 (US); CORLEY, Zachary D., Cupertino, 95014 (US)
(74) Representative: Zacco Denmark A/S

(57) **Abstract**

Various implementations disclosed herein include devices, systems, and methods that that upscale a small portion of a source image based on a determined region of interest. For example, a process may obtain source content at a first resolution for presentation to a user via a display of a device. The process may further identify a user gaze direction and a user head pose based on sensor data and in response, predict a region of interest corresponding to an area of the source content. The process may further upscale the area of the source content to a second resolution that is greater than the first resolution and generate combined content by combining the upscaled area with a remaining area of the source content having the first resolution. The process may further present a view of the combined content to a user via the display.

## Description

### TECHNICAL FIELD

The present disclosure generally relates to systems, methods, and devices that use gaze and head pose to upscale portions of a source image for viewing via electronic devices, such as head-mounted devices (HMDs).

### BACKGROUND

Existing techniques for enabling a user to view content on a high-resolution display of a device may be improved with respect to power and compute requirements to provide desirable viewing experiences.

### SUMMARY

Various implementations disclosed herein include devices, systems, and methods that enable a process that upscales only a small portion of a source image based on a region of interest determined based on user gaze, user head pose, camera calibration information, etc. For example, a source image having a low resolution or quality may be transmitted and/or decoded for display via a high-resolution display such as, for example, a 4K resolution display. In some implementations, a source image may include a content frame that has been warped due to wide-angle lens distortion and/or other warps applied to optimize transmission and encoding. In some implementations, a source image may include, *inter alia,* immersive media, passthrough content, etc.

In some implementations, a first portion of a source image corresponding to a region of interest may be upscaled and combined with a remaining portion of the source image that has not been upscaled for presentation via a high-resolution display. Combining the first portion of a source image with the remaining portion of the source image may include mapping the first portion of a source image (i.e., the upscaled portion) to user view space for combination with the remaining portion of the source image (i.e., the non-upscaled portion) that may be additionally mapped into user view space. The aforementioned process may help to reduce power/compute requirements with respect to scenarios associated with, for example, pixel throughput limitations of a video decoder, network bandwidth issues, low resolution cameras, etc.

In some implementations, information associated with the user gaze may be excluded from access by systems external to the electronic device. For example, a system or software (external to the system or device performing the upscaling) requesting the aforementioned source image portion for upscaling may be unable to access user gaze information as the upscaling process is performed on a different device thereby maintaining user data privacy.

In some implementations, an electronic device has a processor (e.g., one or more processors) that executes instructions stored in a non-transitory computer-readable medium to perform a method. The method performs one or more steps or processes. In some implementations, the electronic device obtains source content at a first resolution for presentation to a user via the one or more displays. In some implementations, a user gaze direction and a user head pose may be identified based on sensor data obtained via one or more sensors and a region of interest corresponding to an area of the source content may be identified based on the identified user gaze direction and the identified user head pose. In some implementations, the area of the source content may be upscaled to a second resolution that is greater than the first resolution combined content may be generated by combining the upscaled area having the second resolution with a remaining area of the source content having the first resolution. In some implementations, a view of the combined content may be presented to the user via the one or more displays.

In accordance with some implementations, a device includes one or more processors, a non-transitory memory, and one or more programs; the one or more programs are stored in the non-transitory memory and configured to be executed by the one or more processors and the one or more programs include instructions for performing or causing performance of any of the methods described herein. In accordance with some implementations, a non-transitory computer readable storage medium has stored therein instructions, which, when executed by one or more processors of a device, cause the device to perform or cause performance of any of the methods described herein. In accordance with some implementations, a device includes: one or more processors, a non-transitory memory, and means for performing or causing performance of any of the methods described herein.

### BRIEF DESCRIPTION OF THE DRAWINGS

So that the present disclosure can be understood by those of ordinary skill in the art, a more detailed description may be had by reference to aspects of some illustrative implementations, some of which are shown in the accompanying drawings.
Figures 1A-B illustrate exemplary electronic devices operating in a physical environment in accordance with some implementations.
Figure 2 illustrates a view of a warped image in content warp space and a view of a rendered image in content view space, in accordance with some implementations.
Figure 3 illustrates a pipeline configured to dynamically upscale portions of an image for optimized viewing via a device such as an HMD, in accordance with some implementations.
Figure 4 illustrates a protected system compositor pipeline configured to dynamically upscale portions of an image for optimized viewing via a device such as an HMD, in accordance with some implementations.
Figure 5 is a block diagram of an example system illustrating a user device for upscaling only a small portion of a source image based on a region of interest, in accordance with some implementations.
Figure 6 is a flowchart representation of an exemplary method that upscales a small portion of a source image based on a region of interest determined based on user gaze, user head pose, and/or camera calibration information, in accordance with some implementations.
Figure 7 is a block diagram of an electronic device, in accordance with some implementations.

In accordance with common practice the various features illustrated in the drawings may not be drawn to scale. Accordingly, the dimensions of the various features may be arbitrarily expanded or reduced for clarity. In addition, some of the drawings may not depict all of the components of a given system, method or device. Finally, like reference numerals may be used to denote like features throughout the specification and figures.

### DESCRIPTION

Numerous details are described in order to provide a thorough understanding of the example implementations shown in the drawings. However, the drawings merely show some example aspects of the present disclosure and are therefore not to be considered limiting. Those of ordinary skill in the art will appreciate that other effective aspects and/or variants do not include all of the specific details described herein. Moreover, well-known systems, methods, components, devices and circuits have not been described in exhaustive detail so as not to obscure more pertinent aspects of the example implementations described herein.

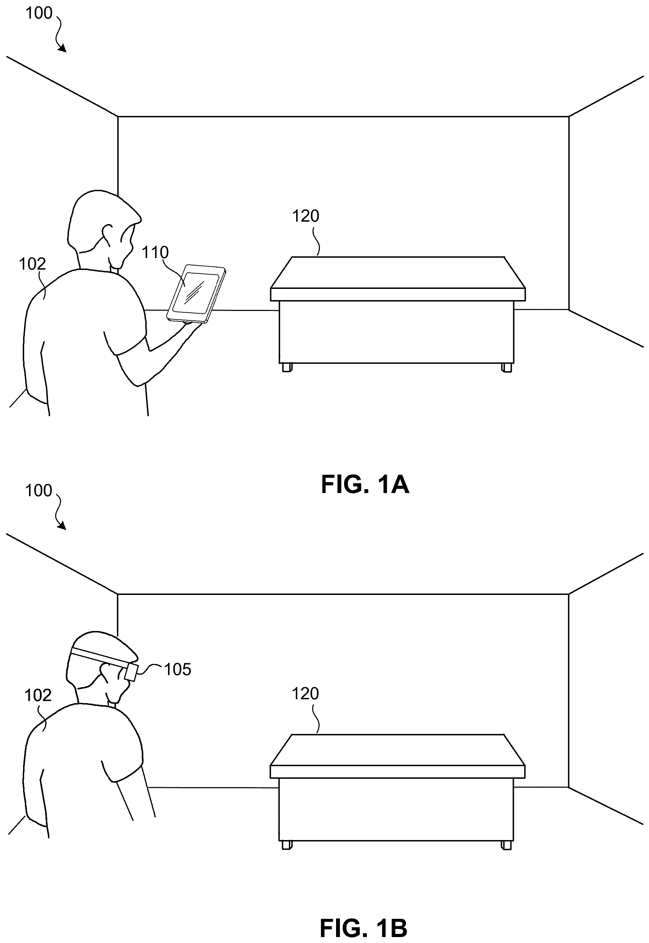

**Figures 1A-B** illustrate exemplary electronic devices 105 and 110 operating in a physical environment 100. In the example of Figures 1A-B, the physical environment 100 is a room that includes a desk 120. The electronic devices 105 and 110 may include one or more cameras, microphones, depth sensors, or other sensors that can be used to capture information about and evaluate the physical environment 100 and the objects within it, as well as information about the user 102 of electronic devices 105 and 110. The information about the physical environment 100 and/or user 102 may be used to provide visual and audio content and/or to identify the current location of the physical environment 100 and/or the location of the user 102 within the physical environment 100.

In some implementations, views of an extended reality (XR) environment may be provided to one or more participants (e.g., user 102 and/or other participants not shown) via electronic devices 105 (e.g., a wearable device such as an HMD) and/or 110 (e.g., a handheld device such as a mobile device, a tablet computing device, a laptop computer, etc.). Such an XR environment may include views of a 3D environment that are generated based on camera images and/or depth camera images of the physical environment 100 as well as a representation of user 102 based on camera images and/or depth camera images of the user 102. Such an XR environment may include virtual content that is positioned at 3D locations relative to a 3D coordinate system associated with the XR environment, which may correspond to a 3D coordinate system of the physical environment 100.

In some implementations, an electronic device (e.g., device 105 such as an HMD) may be configured to provide head pose and gaze dependent video enhancements by intelligently identifying regions of an image that a user is focused on (e.g., a region where a user is looking) and applying targeted upscaling only to this region. This targeted upscaling process may reduce power and compute requirements by not requiring an entire image or frame of a video to be upscaled.

In some implementations, an electronic device may be configured to obtain source content at a first (low) resolution for presentation to a user via a display of the electronic device. For example, source content may include a content frame or image that has been warped due to wide-angle lens distortion and/or other warp types applied to optimize transmission and encoding processes.

In some implementations, a user gaze direction and a user head pose may be identified (e.g., via sensor data) and a region of interest corresponding to an area of the source content may be predicted (e.g., the area may include objects or portions of objects of the source content) based on the identified user gaze direction and the identified user head pose. For example, a determination of where a user is looking with respect to one or more prior frames of source content may be used to determine a region of interest and potential upscaling strategy to be used for a subsequent frame. In some implementations, the one or more prior frames may include blank frames (e.g., for determining user gaze direction and head pose) occurring prior to initiating display of content (e.g., immersive or pass through content).

In some implementations, the area of the source content associated with the predicted region of interest may be upscaled to a second (high) resolution (e.g., 4K) that is greater than the low resolution of the source content.

In some implementations, combined content may be generated by combining the upscaled area having the second resolution with a remaining area of the source content having the first resolution. A view of the combined content may be presented to the user via the display of the electronic device.

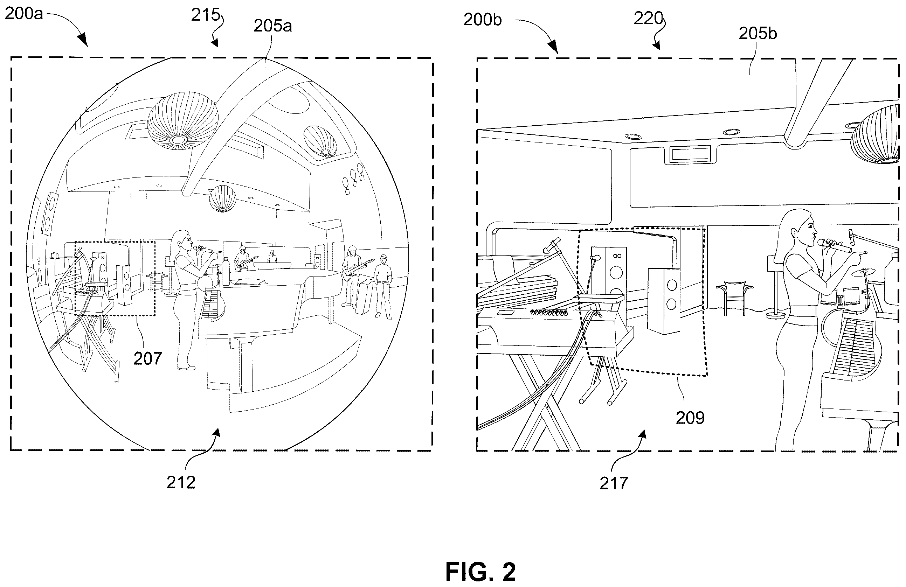

**Figure 2** illustrates a view 200a of a warped image 205a in content warp space 215 and a view 200b of a rendered image 205b in content view space 220, in accordance with some implementations.

In some implementations, warped image 205a represents an image (e.g., source content such as immersive media, passthrough content, etc. in content warp space 215) that has been warped due to wide-angle lens distortion and/or alternative warp types applied to an image or frame to optimize transmission encoding. Content warp space comprises a distorted or pre-warped coordinate space used for creating content that accounts for specified factors such as, for example, lens distortion (e.g., distortion introduced by an HMD lens). In some implementations, warped image 205a is generated in response to receiving (e.g., by an HMD) and decoding media content (e.g., images or frames) using, for example, a hardware-accelerated decoder. Resulting decoded frames comprise distorted images captured using fisheye lenses or wide-angle cameras to capture a large FOV. Subsequently, each distorted image (e.g., warped image 205a) may be projected onto a mesh using camera calibration data (e.g., an orientation of a camera relative to a scene) to correct the distorted image.

In some implementations, rendered image 205b represents an image that has been rendered (without the warping) into 3D space and projected onto (user) view space 220 for each eye based on a gaze and head pose of a user. View space 220 comprises a space used to define a scene relative to a position and orientation of a camera.

In some implementations, an upscaling process is applied to warped image 205a to generate rendered image 205b comprising a high resolution portion 209 (e.g., 4K x 4K) and a low resolution portion 217 (e.g., the rest of the scene at a lower resolution such as, for example, 2K x 2K). In some implementations, the upscaling process may include upscaling only a portion 207 of warped image 205a based on a region of interest (i.e., within portion 207) determined based on user gaze, user head pose, camera calibration info, etc. Subsequently, the portion 207 (being upscaled) of warped image 205a (e.g., corresponding to a region of interest) may be mapped to user view space 220 for combination with a non-upscaled portion 212 (e.g., a remaining portion of warped image 205a) to create combined content mapped into view space 220 to generate rendered image 205b comprising high resolution portion 209 and low resolution portion 217 for user presentation via a device such as an HMD.

The aforementioned upscaling process may help to reduce power/compute requirements with respect to scenarios associated with, for example, pixel throughput limitations of a video decoder, network bandwidth issues, low resolution cameras, etc.

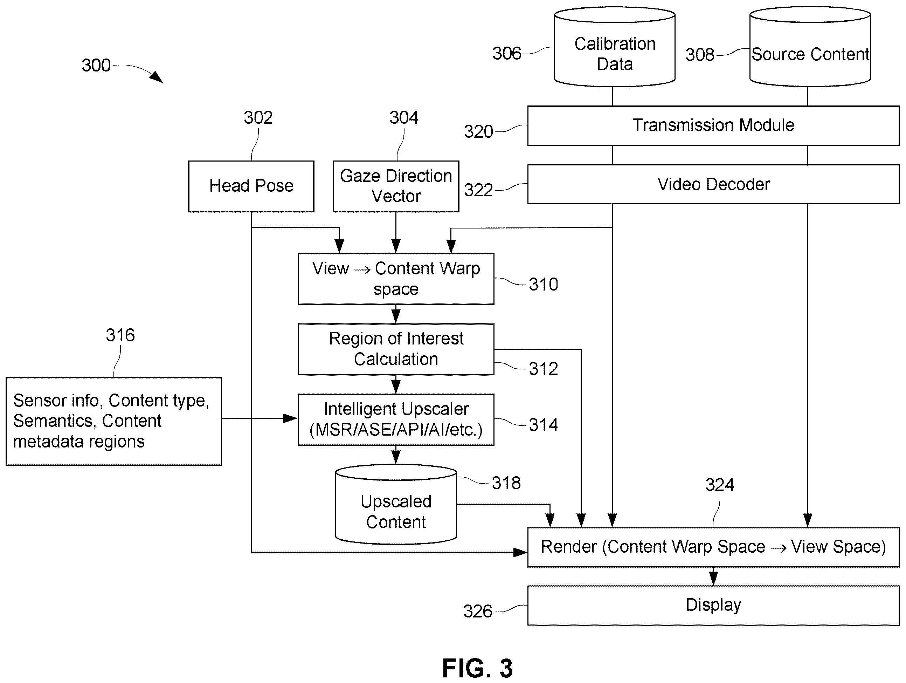

**Figure 3** illustrates a pipeline 300 configured to dynamically upscale portions of an image for optimized viewing via a device such as an HMD, in accordance with some implementations. For example, pipeline 300 enables a process for dynamically upscaling only areas or regions of an image that are predicted to be viewed by a user (e.g., areas or regions that a user is looking at) by sampling from multiple textures (e.g., a low resolution texture and a high resolution texture) and blending them intelligently based on user gaze position (e.g., detected based on determining that a an eye position satisfies a specified positional criteria to determine that a person is looking towards a specified portion of the image), head pose, and camera calibration information.

In some implementations, pipeline 300 optimizes rendering for foveated display systems by integrating gaze, head pose, and camera calibration information to dynamically upscale a region of interest within low resolution (e.g., 2K x 2K) source content (e.g., an image or images). Accordingly, pipeline 300 is configured to selectively apply upscaling to improve visual quality with respect to a user's focal area (of an image) while reducing computational overhead within peripheral areas of the image. Likewise, pipeline 300 is configured to enable seamless transitions between the upscaled and lower (base) resolution regions using blending techniques.

In some implementations, pipeline 300 obtains source content 308 (e.g., an image or frame of immersive media, passthrough content, etc.) at a base resolution (e.g., a low resolution such as 2K x 2K) for transmission via transmission module 320 and decoding via video decoder 322.

In some implementations, calibration data 306 is obtained to tune the pipeline 300 with respect to factors such as gaze accuracy, texture blending, environmental adjustments, etc.

In some implementations, user head pose 302 may be tracked in real time to ensure that a mesh moves dynamically with the user's head thereby keeping content aligned with the user. For example, user head pose 302 may be configured to ensure that an undistorted image maintains alignment with a user's gaze direction vector 304 (e.g., a 3D vector originating from the center of an eye or camera position) and head movement. The user's gaze direction vector 304 may be used to determine a focal region associated with user attention (e.g., a region of interest). For example, gaze direction vector 304 and head pose 302 (e.g., a head pose matrix) may be combined to compute a gaze position in 3D space. Subsequently, the gaze position may be mapped to screen coordinates to apply upscaling to a region of interest of the user. In some implementations, pipeline 300 may be configured to maintain privacy by ensuring that external (third-party) applications do not have direct access to gaze information during an upscaling process.

In some implementations, a view to content warp space module 310 may be configured to warp a portion (e.g., portion 207 as illustrated in figure 2) of the source content 308 for upscaling. The portion of the source content 308 identified for upscaling may be associated with a region of interest determined via a region of interest calculation 312 based on the gaze direction vector 304 and head pose 304 (and calibration data 306).

In some implementations, the portion of the source content 308 identified for upscaling (i.e., the region of interest) is input into an intelligent upscaler 314 to enhance a resolution and quality (e.g., upscale) of the portion of the source image by increasing a pixel count using, for example, rule based algorithms or artificial intelligence (AI) to recover or generate details that were not present in the original source content 308 (e.g., low-resolution content).

In some implementations, intelligent upscaler 314 may include a hardware upscaler that may include, for example, multiscale retinex (MSR) hardware to enhance a contrast and dynamic range of the portion of the source image associated with the region of interest.

In some implementations, intelligent upscaler 314 may include a scaling and enhancement engine (ASE) configured to enhance image quality in a system-on-chip (SoC). In some implementations, an ASE may be configured to analyze image portions to detect edges (of the image portions) by calculating a first derivative of image portion to perform upscaling with respect to detected edges and associated directions thereby enabling new pixels to align with the detected edges to preserve an appearance of sharpness and detail in the image.

In some implementations, intelligent upscaler 314 may include an application programming interface (API) with direct access to a GPU for optimizing graphics. Likewise, the API may be configured to handle tasks related to resizing, resampling, and rendering images.

In some implementations, intelligent upscaler 314 may use machine learning, deterministic rule-based, and/or computer vision algorithms to enhance a resolution (upscale) of region of interest of portions of images with respect to scenarios associated with bandwidth limitations, low-resolution content, or devices with lower rendering capabilities.

In some implementations, a render module 324 may be configured as a texture sampling mechanism configured to obtain upscaled content 318 (associated with a region of interest of the image) from intelligent upscaler 314 and a remaining area of the source content 308 from video decoder 322. The render module 324 is further configured to generate combined content by combining the upscaled content 318 with the remaining area of the source content 308 for presentation via, for example, an HMD.

In some implementations, render module 324 may include a blending mechanism for selecting and blending low resolution texture (external to region of interest) and high resolution texture (associated with the region of interest) based on where each pixel being shaded is located with respect to a user gaze region.

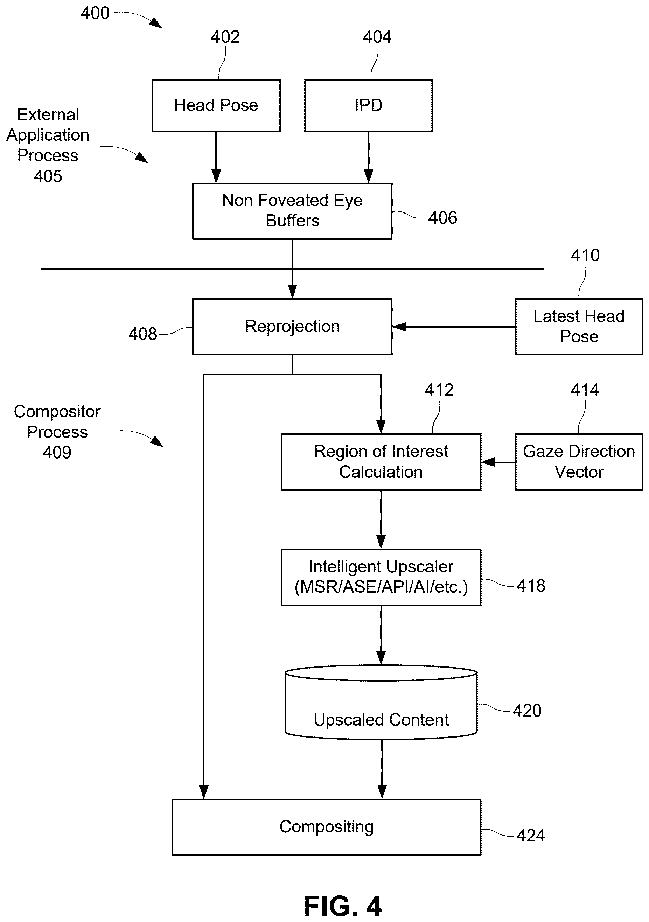

**Figure 4** illustrates a compositor pipeline 400 configured to dynamically upscale portions of an image for optimized viewing via a device such as an HMD, in accordance with some implementations. Pipeline 400 is enabled maintain gaze privacy and enhance external (third-party) applications without exposing sensitive user data such as, for example, user gaze patterns.

In some implementations, pipeline 400 executes an external (third party) application process 405 configured to track a user head pose 402 to adjust the camera perspectives for each eye buffer. Likewise, interpupillary distance (IPD) 504 may be determined to ensure proper stereo separation between non-foveated eye buffers 406 to adjust camera settings to ensure that a visual perception of depth is accurate.

In some implementations, pipeline 400 executes a compositor process 409 configured to reproject 408 source content from non-foveated eye buffers 406 (e.g., left and right) at a base (low) resolution. Subsequently, information associated with an updated head pose 410 (e.g., a latest head pose) is applied to the non-foveated eye buffers 406 to adjust for head movement and realign content with the user's current viewpoint. In response, a region of interest calculation 412 is determined based on gaze direction vector 414 (not detectable via external application process 405) and the updated head pose 410. The region of interest calculation 412 defines a region of interest identifying a portion of the source content to upscale (e.g., a region centered around the user's foveal region or gaze point) for better clarity and visual fidelity.

In some implementations the portion (e.g., specified objects) of the source content identified for upscaling (i.e., the region of interest) is input into an intelligent upscaler 418 to enhance a resolution and quality (e.g., upscale) of the portion of the source image (creating upscaled content 420) by increasing a pixel count using, for example, deterministic, rule based algorithms or artificial intelligence (AI) to recover or generate details that were not present in the original source content (e.g., low-resolution content).

In some implementations, intelligent upscaler 418 may include, *inter alia,* a hardware upscaler (e.g., MSR), ASE, an API, machine learning modules, deterministic, rule-based, and/or computer vision algorithms, etc. as described, *supra,* with respect to intelligent upscaler 314 of figure 3.

In some implementations, upscaled content 420 (associated with a region of interest of the image) from intelligent upscaler 418 is blended, via a composting module 424, with the remaining portions (e.g., lower resolution portions) of the reprojected source content. The blending process enables a smooth transition between high-resolution and lower-resolution portions of the source content (e.g., an image) for presentation via, for example, an external third party application to ensure that the external third party application may receive accurate high-quality eye buffers for rendering, while maintaining head pose and IPD considerations as well excluding user gaze information from access by the external third party application.

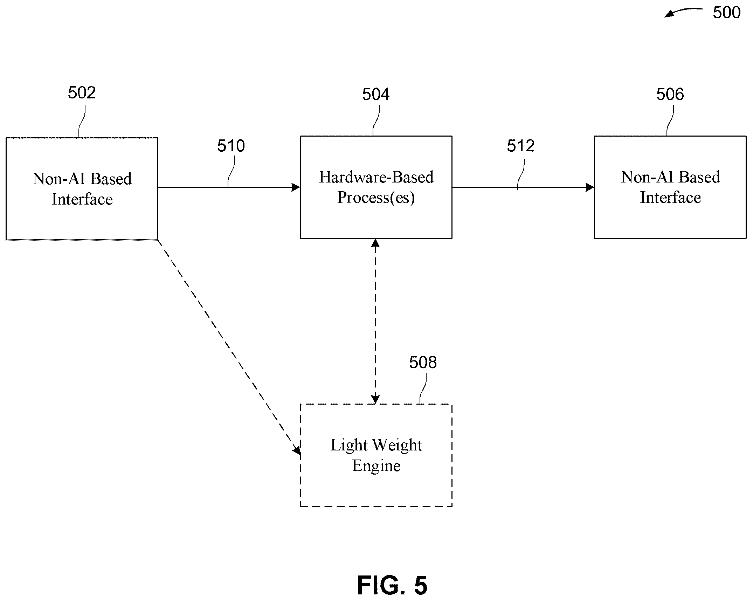

**Figure 5** is a block diagram of an example system illustrating a user device 500 for upscaling only a small portion of a source image based on a region of interest determined based on user gaze, user head pose, and/or camera calibration information. The user device 500 (e.g., an HMD) may include a non-AI-based interface 502, hardware-based process(es) 504, a non-AI based interface 506, and a light weight engine 508. Hardware based process(es) 504 may include or may alternatively be deterministic, deterministic, rule-based or computer vision-based processes. Likewise, hardware based-process(es) 504 may be executable via a hardware upscaler such as multiscale retinex hardware, a scaling and enhancement engine, an API, machine learning modules, etc.

In some embodiments, non-AI-based (e.g., hardware based) interface 502 is configured to accept input data (e.g., from sensors, databases, etc.) including source content (e.g., images, frames of video, etc.) to execute a process (e.g., hardware based, deterministic, rule based, computer vision based, etc.) for dynamically upscaling only areas or regions of an image or frame that are predicted to be viewed by a user (e.g., areas or regions that a user is looking at). The process may include sampling from multiple textures (e.g., a low-resolution texture and a high resolution texture) and intelligently blending the textures based on user gaze position, head pose, and camera calibration information.

Inputs 510 from non-AI-based interface 502 can be fed to hardware based process(es) 504. Hardware based process(es) 504 can include one or more learning-based and/or non-learning-based models for perceiving, synthesizing, and inferring information. Persons skilled in the art will appreciate that the hardware based process(es) 504 can include any suitable number of hardware based process(es) to generate output 512 based on input 510.

In some embodiments, the hardware-based process(es) 504 may be used in combination with, for example, computer vision and/or deterministic, rule based techniques that may be used to upscale a portion of content frame/image (e.g., corresponding to a region of interest) and combine with a non-upscaled portion the content frame/image to help reduce power/compute requirements with respect to scenarios associated with, for example, pixel throughput limitations of a video decoder, network bandwidth issues, low resolution cameras, etc.

In some embodiments, user device 500 may optionally elect to use a light weight engine 508 instead of hardware-based process(es) 504 to upscale a portion of content frame/image (e.g., corresponding to a region of interest) and combine with a non-upscaled portion the content frame/image. The light weight engine 408 may be a non-learning network.

In some embodiments, non-AI-based interface 406 is configured to accept results from hardware-based process(es) 504 and/or a light weight engine 508 to provide combined content comprising an upscaled content portion (e.g., a high resolution portion of an image) with a remaining portion (e.g., a high resolution portion of an image) of source content to provide an enhanced view of the content.

For example, output from hardware-based process(es) 504 and/or a light weight engine 508 is provided to non-AI based interface 506, where interface 506 provides an enhanced view of the content.

Persons of ordinary skill in the art will appreciate that hardware-based process(es) process 504 can include any suitable machine learning models that are well-known or widely available such as regression techniques, classification techniques, neural networks, and deep learning networks. For instance, hardware-based process(es) 504 can include neural networks such as Artificial Neural Network (ANN), Convolutional Neural Network (CNN), Recurrent Neural Network (RNN), Adversarial Network (GAN), Reinforcement Learning Model (RLM), Encoder/Decoder Networks, and/or Transformer-Based Models (e.g., Bidirectional Encoder Representations from Transformers (BERT), Generative Pre-trained Transformer (GPT), and/or a multimodal large language model (LLM)). Additionally or alternatively, persons of ordinary skill in the art will appreciate that hardware-based process(es) can be any suitable non-learning processes such as rule-based systems, computer vision based systems, heuristics, decision trees, knowledge-based systems, statistical or stochastic systems, and expert systems.

In instances where hardware-based process(es) 504 include a machine-learning based model, hardware-based process(es) can be trained to analyze an original image with respect to a detected region of interest determined based on user gaze, user head pose, camera calibration info, etc. to upscale a portion of the original image (e.g., an object corresponding to a region of interest) and combine the upscaled portion with non-upscaled portion of the original image to generate an enhanced view of content using one or more well-known or widely available training techniques such as supervised learning, semi-supervised learning, unsupervised learning, and/or reinforcement learning techniques. The training data can include images, gaze data, head pose data, camera calibration information, etc.

In some embodiments, where hardware-based process(es) 504 includes a machine-learning based model, the machine-learning based model may be trained on large datasets that include gaze data, head pose data, camera calibration information.

In some embodiments, hardware-based process(es) 504 can be trained with both synthetic and non-synthetic data.

In some embodiments, hardware-based process(es) 504 can be deployed as one or more generative models, where content is automatically generated by one or more computers in response to a request to generate the content. The automatically-generated content is optionally generated on-device (e.g., generated at least in part by a computer system at which a request to generate the content is received) and/or generated off-device (e.g., generated at least in part by one or more nearby computers that are available via a local network or one or more computers that are available via the internet). This automatically-generated content optionally may include visual content (e.g., images, graphics, and/or video), audio content, and/or text content.

In some embodiments, novel automatically-generated content is referred to as generative content (e.g., generative images, generative graphics, generative video, generative audio, and/or generative text). Generative content is typically generated based on a prompt input 510 to the hardware-based process(es) 504. Non-Al-based interface 502 optionally includes one or more pre-processing steps to adjust the input before it is used by an AI model to generate an output image (e.g., adjustment to a user-provided prompt, creation of a system-generated prompt, and/or AI model selection). Non-Al-based interface 506 optionally includes one or more post-processing steps to adjust the output 512 by the hardware-based process(es) 504 (e.g., passing the AI model output to a different AI model, upscaling, downscaling, cropping, formatting, and/or adding or removing metadata) before the output 512 of the hardware-based process(es) 504 used for other purposes such as being provided to a different software process for further processing or being presented (e.g., visually or audibly) to a user.

A prompt input 510 for generating generative content can include one or more of: one or more words (e.g., a natural language prompt that is written or spoken), one or more images and/or upscaled portions of images, one or more drawings, and/or one or more videos with upscaled portions of frames. Generative pre-trained transformer models are a type of LLM that can be effective at generating novel generative content based on a prompt input 510. In some embodiments, the hardware-based process(es) 504 uses a prompt input 510 that includes text to generate either different generative text, generative audio content, and/or generative visual content such as upscaled visual content. In other embodiments, the hardware-based process(es) 504 uses a prompt input 510 that includes visual content and/or an audio content to generate generative text (e.g., a transcription of audio and/or a description of the visual content). In yet other embodiments, the hardware-based process(es) 504 uses a prompt input 510 that includes multiple types of content (e.g., text, images, audio, video, and/or other sensor data) to generate generative content. A prompt input 510 sometimes also includes values for one or more parameters indicating an importance of various parts of the prompt. Some prompt inputs 510 include a structured set of instructions that can be provided to the hardware-based process(es) 504 that include phrasing, a specified style, relevant context (e.g., starting point content and/or one or more examples), and/or a role for the hardware-based process(es) 504.

Generative content is generally based on the prompt but is not deterministically selected from pre-generated content and is, instead, generated using the prompt as a starting point. In some embodiments, pre-existing content (e.g., visual content) is used as part of the prompt for creating generative content (e.g., the pre-existing content is used as a starting point for creating the generative content). For example, a prompt input 510 could request that visual content be modified to include, exclude, or upscale content specified by a prompt (e.g., removing an identified feature in the visual content or adding a feature to the visual content changing a visual style of the visual content, and/or upscaling a portion of the visual content that is described in a prompt, etc.). In some embodiments, a random or pseudo-random seed is used as part of the prompt input 510 for creating generative content (e.g., the random or pseudo-random seed content is used as a starting point for creating the generative content). For example, when upscaling a portion of an image via a diffusion model, a random noise pattern is iteratively denoised based on the prompt input 510 to upscale the image portion. While specific types of hardware-based process(es) 504 have been described herein, it should be understood that a variety of different hardware-based process(es) could be used to generate generative content based on a prompt.

In instances where hardware-based process(es) 504 is a non-learning-based system, hardware-based process(es) 504 can use a pre-defined set of rules or a pre-defined structure to make decisions based on the inputs that the process sees. For example, the hardware-based process(es) 504 can be used to optimize rendering for foveated display systems by integrating gaze, head pose, and camera calibration information to dynamically determine and selectively upscale a user's focal area (a region of interest) within low resolution source content (e.g., an image or images) while reducing computational overhead within peripheral areas of the source content. Likewise, hardware-based process(es) 504 can be used to enable seamless transitions between the upscaled and lower (base) resolution regions using blending techniques.

Likewise, the hardware-based process(es) 504 can be used to enable extrapolation techniques to selectively upscale portions of an image.

Some embodiments described herein can include use of learning and/or non-learning-based process(es). The use can include collecting, pre-processing, encoding, labeling, organizing, analyzing, recommending and/or generating data. Entities that collect, share, and/or otherwise utilize user data should provide transparency and/or obtain user consent when collecting such data. The present disclosure recognizes that the use of the data in the hardware-based process(es) can be used to benefit users. For example, the data can be used to train models that can be deployed to improve performance, accuracy, and/or functionality of applications and/or services. Accordingly, the use of the data enables the hardware-based process(es) to adapt and/or optimize operations to provide more personalized, efficient, and/or enhanced user experiences. Such adaptation and/or optimization can include tailoring content, recommendations, and/or interactions to individual users, as well as streamlining processes, and/or enabling more intuitive interfaces. Further beneficial uses of the data in the hardware-based process(es) can be used to are also contemplated by the present disclosure.

The present disclosure contemplates that, in some embodiments, data used by the hardware-based process(es) can be used to include publicly available data. To protect user privacy, data may be anonymized, aggregated, and/or otherwise processed to remove or to the degree possible limit any individual identification (e.g., limiting sharing of gaze data). As discussed herein, entities that collect, share, and/or otherwise utilize such data should obtain user consent prior to and/or provide transparency when collecting such data. Furthermore, the present disclosure contemplates that the entities responsible for the use of data, including, but not limited to data used in association with the hardware-based process(es), should attempt to comply with well-established privacy policies and/or privacy practices.

For example, such entities may implement and consistently follow policies and practices recognized as meeting or exceeding industry standards and regulatory requirements for developing and/or training hardware-based process(es). In doing so, attempts should be made to ensure all intellectual property rights and privacy considerations are maintained. Training should include practices safeguarding training data, such as personal information, through sufficient protections against misuse or exploitation. Such policies and practices should cover all stages of the rule-based process(es) development, training, and use, including data collection, data preparation, model training, model evaluation, model deployment, and ongoing monitoring and maintenance. Transparency and accountability should be maintained throughout. Such policies should be easily accessible by users and should be updated as the collection and/or use of data changes. User data should be collected for legitimate and reasonable uses of the entity and not shared or sold outside of those legitimate uses. Further, such collection and sharing should occur through transparency with users and/or after receiving the informed consent of the users. Additionally, such entities should consider taking any needed steps for safeguarding and securing access to such data and ensuring that others with access to the data adhere to their privacy policies and procedures. Further, such entities should subject themselves to evaluation by third parties to certify, as appropriate for transparency purposes, their adherence to widely accepted privacy policies and practices. In addition, policies and/or practices should be adapted to the particular type of data (e.g., user gaze data) being collected and/or accessed and tailored to a specific use case and applicable laws and standards, including jurisdiction-specific considerations.

In some embodiments, hardware-based process(es) may utilize models that may be trained (e.g., supervised learning or unsupervised learning) using various training data, including data collected using a user device. Such use of user-collected data (e.g., user gaze data) may be limited to operations on the user device. For example, the training of the model can be done locally on the user device so no part of the data is sent to another device. In other implementations, the training of the model can be performed using one or more other devices (e.g., server(s)) in addition to the user device but done in a privacy preserving manner, e.g., via multi-party computation as may be done cryptographically by secret sharing data or other means so that the user data is not leaked to the other devices.

In some embodiments, the trained model can be centrally stored on the user device or stored on multiple devices, e.g., as in federated learning. Such decentralized storage can similarly be done in a privacy preserving manner, e.g., via cryptographic operations where each piece of data is broken into shards such that no device alone (i.e., only collectively with another device(s)) or only the user device can reassemble or use the data. In this manner, a pattern of behavior of the user or the device may not be leaked, while taking advantage of increased computational resources of the other devices to train and execute the ML model. Accordingly, user-collected data can be protected. In some implementations, data from multiple devices can be combined in a privacy-preserving manner to train an ML model.

In some embodiments, the present disclosure contemplates that data used for hardware-based process(es) may be kept strictly separated from platforms where the hardware-based process(es) are deployed and/or used to interact with users and/or process data. In such embodiments, data used for offline training of the hardware-based process(es) may be maintained in secured datastores with restricted access and/or not be retained beyond the duration necessary for training purposes. In some embodiments, the hardware-based process(es) may utilize a local memory cache to store data temporarily during a user session. The local memory cache may be used to improve performance of the hardware-based process(es). However, to protect user privacy, data stored in the local memory cache may be erased after the user session is completed. Any temporary caches of data used for online learning or inference may be promptly erased after processing. All data collection, transfer, and/or storage should use industry-standard encryption and/or secure communication.

In some embodiments, as noted above, techniques such as federated learning, differential privacy, secure hardware components, homomorphic encryption, and/or multi-party computation among other techniques may be utilized to further protect personal information data during training and/or use of the hardware-based process(es). The hardware-based process(es) should be monitored for changes in underlying data distribution such as concept drift or data skew that can degrade performance of the hardware-based process(es) over time.

In some embodiments, the hardware-based process(es) are trained using a combination of offline and online training. Offline training can use curated datasets to establish baseline model performance, while online training can allow the hardware-based process(es) to continually adapt and/or improve. The present disclosure recognizes the importance of maintaining strict data governance practices throughout this process to ensure user privacy is protected.

In some embodiments, the hardware-based process(es) processes may be designed with safeguards to maintain adherence to originally intended purposes, even as the rule-based process(es) adapt based on new data. Any significant changes in data collection and/or applications of hardware-based process(es) use may (and in some cases should) be transparently communicated to affected stakeholders and/or include obtaining user consent with respect to changes in how user data is collected and/or utilized.

Despite the foregoing, the present disclosure also contemplates embodiments in which users selectively restrict and/or block the use of and/or access to data. That is, the present disclosure contemplates that hardware and/or software elements can be provided to prevent or block access to data. For example, in the case of some services, the present technology should be configured to allow users to select to "opt in" or "opt out" of participation in the collection of data during registration for services or anytime thereafter. In another example, the present technology should be configured to allow users to select not to provide certain data for training the rule-based process(es) and/or for use as input during the inference stage of such systems. In yet another example, the present technology should be configured to allow users to be able to select to limit the length of time data is maintained or entirely prohibit the use of their data for use by the rule-based process(es). In addition to providing "opt in" and "opt out" options, the present disclosure contemplates providing notifications relating to the access or use of personal information. For instance, a user can be notified when their data is being input into the hardware-based process(es) for training or inference purposes, and/or reminded when the hardware-based process(es) generate outputs or make decisions based on their data.

The present disclosure recognizes hardware-based process(es) should incorporate explicit restrictions and/or oversight to mitigate against risks that may be present even when such systems having been designed, developed, and/or operated according to industry best practices and standards. For example, outputs may be produced that could be considered erroneous, harmful, offensive, and/or biased; such outputs may not necessarily reflect the opinions or positions of the entities developing or deploying these systems. Furthermore, in some cases, references to or failures to cite third-party products and/or services in the outputs should not be construed as endorsements or affiliations by the entities providing the hardware-based process(es). Generated content can be filtered for potentially inappropriate or dangerous material prior to being presented to users, while human oversight and/or ability to override or correct erroneous or undesirable outputs can be maintained as a failsafe.

The present disclosure further contemplates that users of the hardware-based process(es) should refrain from using the services in any manner that infringes upon, misappropriates, or violates the rights of any party. Furthermore, the hardware-based process(es) should not be used for any unlawful or illegal activity, nor to develop any application or use case that would commit or facilitate the commission of a crime, or other tortious, unlawful, or illegal act including misinformation, disinformation, misrepresentations (e.g., deepfakes), deception, impersonation, and propaganda. The hardware-based process(es) should not violate, misappropriate, or infringe any copyrights, trademarks, rights of privacy and publicity, trade secrets, patents, or other proprietary or legal rights of any party, and appropriately attribute content as required. Further, the hardware-based process(es) should not interfere with any security, digital signing, digital rights management, content protection, verification, or authentication mechanisms. The hardware-based process(es) should not misrepresent machine-generated outputs as being human-generated.

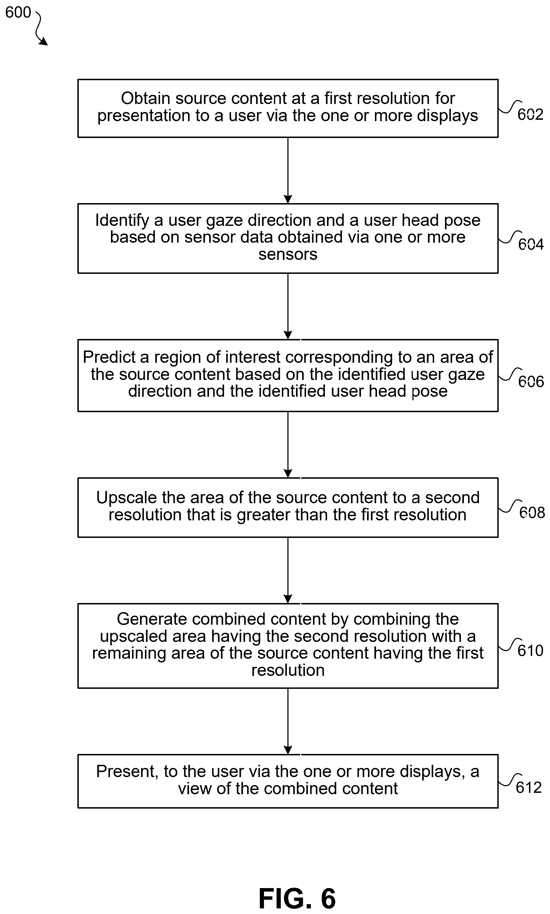

**Figure 6** is a flowchart representation of an exemplary method 600 that that upscales only a small portion of a source image based on a region of interest determined based on user gaze, user head pose, and/or camera calibration information, in accordance with some implementations. In some implementations, the method 600 is performed by a device, such as a mobile device, desktop, laptop, HMD, or server device. In some implementations, the device has a screen for displaying images and/or a screen for viewing stereoscopic images such as a head-mounted display (HMD such as e.g., device 105 of Figure 1). In some implementations, the method 600 is performed by processing logic, including hardware, firmware, software, or a combination thereof. In some implementations, the method 600 is performed by a processor executing code stored in a non-transitory computer-readable medium (e.g., a memory). Each of the blocks in the method 600 may be enabled and executed in any order.

At block 602, the method 600 obtains source content at a first resolution for presentation to a user via a display of a device such as an HMD. For example, a source image may be obtained from source content 308 as described with respect to figure 3.

In some implementations the source content may include an image that is warped due to wide-angle lens distortion applied to optimize transmission and encoding. For example, the source content may include a warped image 205a in content warp space 215 as described with respect to figure 2.

In some implementations, the source content includes immersive media.

In some implementations, the source content includes passthrough content.

At block 604, the method 600 identifies a user gaze direction and a user head pose based on sensor data obtained via one or more sensors. For example, a gaze direction vector 304 and head pose 302 may be tracked in real time to keep content aligned with a user as described with respect to figure 3.

In some implementations, information associated with the user gaze direction may be excluded from being accessed by systems external to the device. For example, a pipeline 400 may be configured to maintain privacy by ensuring that external (third-party) applications do not have direct access to gaze information during an upscaling process to maintain user privacy as described with respect to figure 4.

At block 606, the method 600 predicts a region of interest corresponding to an area of the source content based on the identified user gaze direction and the identified user head pose. For example, a portion 207 of warped image 205a may be identified as a region of interest as described with respect to figure 2.

In some implementations, the user gaze direction and the user head pose may be used to identify a position of a view of the user respect to at least one prior frame of the source content and the region of interest may be predicted for a next frame of the source content presented subsequent to the least one prior frame.

In some implementations, the at least one prior frame may include content.

In some implementations, the at least one prior frame may be a blank frame without any content.

In some implementations, predicting the region of interest may be further based on calibration information (e.g., calibration data 306 as illustrated in figure 3) associated with one or more sensors.

In some implementations, predicting the region of interest may be further based on a context of the source content.

In some implementations, the area of the source content may include at least a portion of at least one object.

At block 608, the method 600 upscales the area of the source content to a second resolution that is greater than the first resolution as described with respect to figure 1.

At block 610, the method 600 generates combined content by combining the upscaled area having the second resolution with a remaining area of the source content having the first resolution. For example, a portion 207 (being upscaled) of warped image 205a (e.g., corresponding to a region of interest) may be mapped to user view space 220 for combination with a non-upscaled portion 212 (e.g., a remaining portion of warped image 205a) to create combined content mapped into view space 220 to generate a rendered image 205b comprising high resolution portion 209 and low resolution portion 217 as described with respect to figure 2.

In some implementations, the upscaled area and the remaining area of the source content are separately mapped to a user view space for generating the combined content.

In some implementations, combining the upscaled area with the remaining area of the source content may include blending a region between the upscaled area and the remaining area as described with respect to figure 3.

At block 612, the method 600 presents to the user via the a display, a view of the combined content.

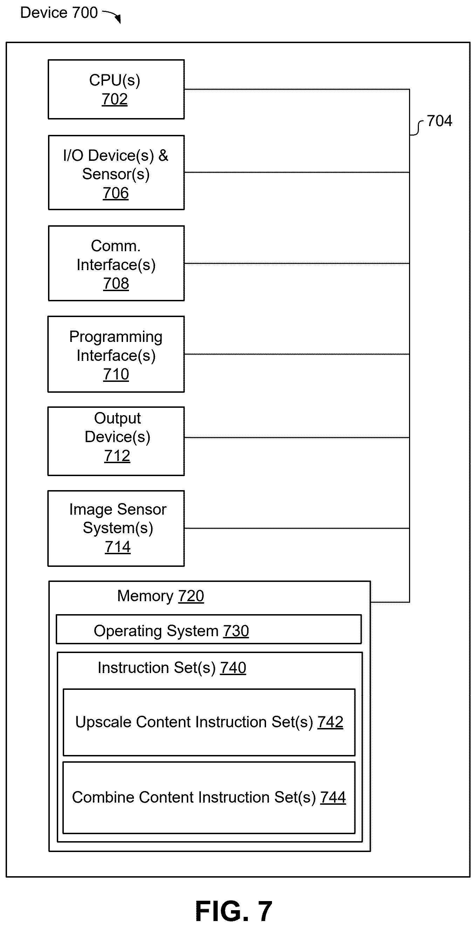

**Figure 7** is a block diagram of an example device 700. Device 700 illustrates an exemplary device configuration for electronic devices 105 and 110 of Figure 1. While certain specific features are illustrated, those skilled in the art will appreciate from the present disclosure that various other features have not been illustrated for the sake of brevity, and so as not to obscure more pertinent aspects of the implementations disclosed herein. To that end, as a non-limiting example, in some implementations the device 700 includes one or more processing units 702 (e.g., microprocessors, ASICs, FPGAs, GPUs, CPUs, processing cores, and/or the like), one or more input/output (I/O) devices and sensors 706, one or more communication interfaces 708 (e.g., USB, FIREWIRE, THUNDERBOLT, IEEE 802.3x, IEEE 802.11x, IEEE 802.14x, GSM, CDMA, TDMA, GPS, IR, BLUETOOTH, ZIGBEE, SPI, I2C, and/or the like type interface), one or more programming (e.g., I/O) interfaces 710, output devices (e.g., one or more displays) 712, one or more interior and/or exterior facing image sensor systems 714, a memory 720, and one or more communication buses 704 for interconnecting these and various other components.

In some implementations, the one or more communication buses 704 include circuitry that interconnects and controls communications between system components. In some implementations, the one or more I/O devices and sensors 706 include at least one of an inertial measurement unit (IMU), an accelerometer, a magnetometer, a gyroscope, a thermometer, one or more physiological sensors (e.g., blood pressure monitor, heart rate monitor, blood oxygen sensor, blood glucose sensor, etc.), one or more microphones, one or more speakers, a haptics engine, one or more depth sensors (e.g., a structured light, a time-of-flight, or the like), one or more cameras (e.g., inward facing cameras and outward facing cameras of an HMD), one or more infrared sensors, one or more heat map sensors, and/or the like.

In some implementations, the one or more displays 712 are configured to present a view of a physical environment, a graphical environment, an extended reality environment, etc. to the user. In some implementations, the one or more displays 712 are configured to present content (determined based on a determined user/object location of the user within the physical environment) to the user. In some implementations, the one or more displays 712 correspond to holographic, digital light processing (DLP), liquid-crystal display (LCD), liquid-crystal on silicon (LCoS), organic light-emitting field-effect transitory (OLET), organic light-emitting diode (OLED), surface-conduction electron-emitter display (SED), field-emission display (FED), quantum-dot light-emitting diode (QD-LED), micro-electromechanical system (MEMS), and/or the like display types. In some implementations, the one or more displays 712 correspond to diffractive, reflective, polarized, holographic, etc. waveguide displays. In one example, the device 700 includes a single display. In another example, the device 700 includes a display for each eye of the user.

In some implementations, the one or more image sensor systems 714 are configured to obtain image data that corresponds to at least a portion of the physical environment 100. For example, the one or more image sensor systems 714 include one or more RGB cameras (e.g., with a complimentary metal-oxide-semiconductor (CMOS) image sensor or a charge-coupled device (CCD) image sensor), monochrome cameras, IR cameras, depth cameras, event-based cameras, and/or the like. In various implementations, the one or more image sensor systems 714 further include illumination sources that emit light, such as a flash. In various implementations, the one or more image sensor systems 714 further include an on-camera image signal processor (ISP) configured to execute a plurality of processing operations on the image data.

In some implementations, sensor data may be obtained by device(s) (e.g., devices 105 and 110 of Figure 1) during a scan of a room of a physical environment. The sensor data may include a 3D point cloud and a sequence of 2D images corresponding to captured views of the room during the scan of the room. In some implementations, the sensor data includes image data (e.g., from an RGB camera), depth data (e.g., a depth image from a depth camera), ambient light sensor data (e.g., from an ambient light sensor), and/or motion data from one or more motion sensors (e.g., accelerometers, gyroscopes, IMU, etc.). In some implementations, the sensor data includes visual inertial odometry (VIO) data determined based on image data. The 3D point cloud may provide semantic information about one or more elements of the room. The 3D point cloud may provide information about the positions and appearance of surface portions within the physical environment. In some implementations, the 3D point cloud is obtained over time, e.g., during a scan of the room, and the 3D point cloud may be updated, and updated versions of the 3D point cloud obtained over time. For example, a 3D representation may be obtained (and analyzed/processed) as it is updated/adjusted over time (e.g., as the user scans a room).

In some implementations, sensor data may be positioning information, some implementations include a VIO to determine equivalent odometry information using sequential camera images (e.g., light intensity image data) and motion data (e.g., acquired from the IMU/motion sensor) to estimate the distance traveled. Alternatively, some implementations of the present disclosure may include a simultaneous localization and mapping (SLAM) system (e.g., position sensors). The SLAM system may include a multidimensional (e.g., 3D) laser scanning and range-measuring system that is GPS independent and that provides real-time simultaneous location and mapping. The SLAM system may generate and manage data for a very accurate point cloud that results from reflections of laser scanning from objects in an environment. Movements of any of the points in the point cloud are accurately tracked over time, so that the SLAM system can maintain precise understanding of its location and orientation as it travels through an environment, using the points in the point cloud as reference points for the location.

In some implementations, the device 700 includes an eye tracking system for detecting eye position and eye movements (e.g., eye gaze detection). For example, an eye tracking system may include one or more infrared (IR) light-emitting diodes (LEDs), an eye tracking camera (e.g., near-IR (NIR) camera), and an illumination source (e.g., an NIR light source) that emits light (e.g., NIR light) towards the eyes of the user. Moreover, the illumination source of the device 700 may emit NIR light to illuminate the eyes of the user and the NIR camera may capture images of the eyes of the user. In some implementations, images captured by the eye tracking system may be analyzed to detect position and movements of the eyes of the user, or to detect other information about the eyes such as pupil dilation or pupil diameter. Moreover, the point of gaze estimated from the eye tracking images may enable gaze-based interaction with content shown on the near-eye display of the device 700.

The memory 720 includes high-speed random-access memory, such as DRAM, SRAM, DDR RAM, or other random-access solid-state memory devices. In some implementations, the memory 720 includes non-volatile memory, such as one or more magnetic disk storage devices, optical disk storage devices, flash memory devices, or other non-volatile solid-state storage devices. The memory 720 optionally includes one or more storage devices remotely located from the one or more processing units 702. The memory 720 includes a non-transitory computer readable storage medium.

In some implementations, the memory 720 or the non-transitory computer readable storage medium of the memory 720 stores an optional operating system 730 and one or more instruction set(s) 740. The operating system 730 includes procedures for handling various basic system services and for performing hardware dependent tasks. In some implementations, the instruction set(s) 740 include executable software defined by binary information stored in the form of electrical charge. In some implementations, the instruction set(s) 740 are software that is executable by the one or more processing units 702 to carry out one or more of the techniques described herein.

The instruction set(s) 740 includes an upscale content instruction set 742 and a combine content instruction set 744. The instruction set(s) 740 may be embodied as a single software executable or multiple software executables.

The upscale content instruction set 742 is configured with instructions executable by a processor to predict a region of interest corresponding to an area of the source content based on identified user gaze direction and identified user head pose and in response, upscaling the area of the source content to a resolution that is greater than a resolution of the remaining source content.

The combine content instruction set 744 is configured with instructions executable by a processor to generate combined content by combining the upscaled area having with a remaining area of the source content having the lower resolution.

Although the instruction set(s) 740 are shown as residing on a single device, it should be understood that in other implementations, any combination of the elements may be located in separate computing devices. Moreover, Figure 7 is intended more as functional description of the various features which are present in a particular implementation as opposed to a structural schematic of the implementations described herein. As recognized by those of ordinary skill in the art, items shown separately could be combined and some items could be separated. The actual number of instructions sets and how features are allocated among them may vary from one implementation to another and may depend in part on the particular combination of hardware, software, and/or firmware chosen for a particular implementation.

Those of ordinary skill in the art will appreciate that well-known systems, methods, components, devices, and circuits have not been described in exhaustive detail so as not to obscure more pertinent aspects of the example implementations described herein. Moreover, other effective aspects and/or variants do not include all of the specific details described herein. Thus, several details are described in order to provide a thorough understanding of the example aspects as shown in the drawings. Moreover, the drawings merely show some example embodiments of the present disclosure and are therefore not to be considered limiting.

While this specification contains many specific implementation details, these should not be construed as limitations on the scope of any inventions or of what may be claimed, but rather as descriptions of features specific to particular embodiments of particular inventions. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially claimed as such, one or more features from a claimed combination can in some cases be excised from the combination, and the claimed combination may be directed to a subcombination or variation of a subcombination.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems can generally be integrated together in a single software product or packaged into multiple software products.

Thus, particular embodiments of the subject matter have been described. Other embodiments are within the scope of the following claims. In some cases, the actions recited in the claims can be performed in a different order and still achieve desirable results. In addition, the processes depicted in the accompanying figures do not necessarily require the particular order shown, or sequential order, to achieve desirable results. In certain implementations, multitasking and parallel processing may be advantageous.

Embodiments of the subject matter and the operations described in this specification can be implemented in digital electronic circuitry, or in computer software, firmware, or hardware, including the structures disclosed in this specification and their structural equivalents, or in combinations of one or more of them. Embodiments of the subject matter described in this specification can be implemented as one or more computer programs, e.g., one or more modules of computer program instructions, encoded on computer storage medium for execution by, or to control the operation of, data processing apparatus. Alternatively, or additionally, the program instructions can be encoded on an artificially generated propagated signal, e.g., a machine-generated electrical, optical, or electromagnetic signal, that is generated to encode information for transmission to suitable receiver apparatus for execution by a data processing apparatus. A computer storage medium can be, or be included in, a computer-readable storage device, a computer-readable storage substrate, a random or serial access memory array or device, or a combination of one or more of them. Moreover, while a computer storage medium is not a propagated signal, a computer storage medium can be a source or destination of computer program instructions encoded in an artificially generated propagated signal. The computer storage medium can also be, or be included in, one or more separate physical components or media (e.g., multiple CDs, disks, or other storage devices).

The term "data processing apparatus" encompasses all kinds of apparatus, devices, and machines for processing data, including by way of example a programmable processor, a computer, a system on a chip, or multiple ones, or combinations, of the foregoing. The apparatus can include special purpose logic circuitry, e.g., an FPGA (field programmable gate array) or an ASIC (application specific integrated circuit). The apparatus can also include, in addition to hardware, code that creates an execution environment for the computer program in question, e.g., code that constitutes processor firmware, a protocol stack, a database management system, an operating system, a cross-platform runtime environment, a virtual machine, or a combination of one or more of them. The apparatus and execution environment can realize various different computing model infrastructures, such as web services, distributed computing and grid computing infrastructures. Unless specifically stated otherwise, it is appreciated that throughout this specification discussions utilizing the terms such as "processing," "computing," "calculating," "determining," and "identifying" or the like refer to actions or processes of a computing device, such as one or more computers or a similar electronic computing device or devices, that manipulate or transform data represented as physical electronic or magnetic quantities within memories, registers, or other information storage devices, transmission devices, or display devices of the computing platform.

The system or systems discussed herein are not limited to any particular hardware architecture or configuration. A computing device can include any suitable arrangement of components that provides a result conditioned on one or more inputs. Suitable computing devices include multipurpose microprocessor-based computer systems accessing stored software that programs or configures the computing system from a general purpose computing apparatus to a specialized computing apparatus implementing one or more implementations of the present subject matter. Any suitable programming, scripting, or other type of language or combinations of languages may be used to implement the teachings contained herein in software to be used in programming or configuring a computing device.

Implementations of the methods disclosed herein may be performed in the operation of such computing devices. The order of the blocks presented in the examples above can be varied for example, blocks can be re-ordered, combined, and/or broken into sub-blocks. Certain blocks or processes can be performed in parallel. The operations described in this specification can be implemented as operations performed by a data processing apparatus on data stored on one or more computer-readable storage devices or received from other sources.

The use of "adapted to" or "configured to" herein is meant as open and inclusive language that does not foreclose devices adapted to or configured to perform additional tasks or steps. Additionally, the use of "based on" is meant to be open and inclusive, in that a process, step, calculation, or other action "based on" one or more recited conditions or values may, in practice, be based on additional conditions or value beyond those recited. Headings, lists, and numbering included herein are for ease of explanation only and are not meant to be limiting.

It will also be understood that, although the terms "first," "second," etc. may be used herein to describe various elements, these elements should not be limited by these terms. These terms are only used to distinguish one element from another. For example, a first node could be termed a second node, and, similarly, a second node could be termed a first node, which changing the meaning of the description, so long as all occurrences of the "first node" are renamed consistently and all occurrences of the "second node" are renamed consistently. The first node and the second node are both nodes, but they are not the same node.

The terminology used herein is for the purpose of describing particular implementations only and is not intended to be limiting of the claims. As used in the description of the implementations and the appended claims, the singular forms "a," "an," and "the" are intended to include the plural forms as well, unless the context clearly indicates otherwise. It will also be understood that the term "and/or" as used herein refers to and encompasses any and all possible combinations of one or more of the associated listed items. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof.

As used herein, the term "if" may be construed to mean "when" or "upon" or "in response to determining" or "in accordance with a determination" or "in response to detecting," that a stated condition precedent is true, depending on the context. Similarly, the phrase "if it is determined [that a stated condition precedent is true]" or "if [a stated condition precedent is true]" or "when [a stated condition precedent is true]" may be construed to mean "upon determining" or "in response to determining" or "in accordance with a determination" or "upon detecting" or "in response to detecting" that the stated condition precedent is true, depending on the context.

Exemplary methods, electronic devices, systems, and non-transitory computer-readable storage media are set out in the following items.

### Item list 1:

1. A method comprising:
   at an electronic device having a processor and one or more displays:
   obtaining source content at a first resolution for presentation to a user via the one or more displays;
   identifying a user gaze direction and a user head pose based on sensor data obtained via one or more sensors;
   predicting a region of interest corresponding to an area of the source content based on the identified user gaze direction and the identified user head pose;
   upscaling the area of the source content to a second resolution that is greater than the first resolution;
   generating combined content by combining the upscaled area having the second resolution with a remaining area of the source content having the first resolution; and
   presenting, to the user via the one or more displays, a view of the combined content.
2. The method of item 1, wherein the upscaled area and the remaining area of the source content are separately mapped to a user view space for generating the combined content.
3. The method of item 1, wherein the source content comprises an image that is warped due to wide-angle lens distortion applied to optimize transmission and encoding.
4. The method of item 1, wherein the user gaze direction and the user head pose identify a position of a view of the user respect to at least one prior frame of the source content, and wherein the region of interest is predicted for a next frame of the source content presented subsequent to the least one prior frame.
5. The method of item 4, wherein the at least one prior frame comprises content.
6. The method of item 4, wherein the at least one prior frame is a blank frame without any content.
7. The method of item 1, wherein predicting the region of interest is further based on calibration information associated with the one or more sensors.
8. The method of item 1, wherein predicting the region of interest is further based on a context of the source content.
9. The method of item 1, wherein combining the upscaled area with the remaining area of the source content include blending a region between the upscaled area and the remaining area.
10. The method of item 1, wherein information associated with the user gaze direction is excluded from being accessed by systems external to the electronic device.
11. The method of item 1, wherein the area of the source content comprises at least a portion of at least one object.
12. The method of item 1, wherein the source content comprises immersive media.
13. The method of item 1, wherein the source content comprises passthrough content.
14. A non-transitory computer-readable medium comprising instructions that when executed by a processor cause the processor to perform operations comprising any one of the methods of items 1-13.
15. An electronic device comprising:
   a non-transitory computer-readable storage medium; and
   one or more processors coupled to the non-transitory computer-readable storage medium, wherein the non-transitory computer-readable storage medium comprises program instructions that, when executed on the one or more processors, cause the electronic device to perform operations comprising:
      obtaining source content at a first resolution for presentation to a user via the one or more displays;
      identifying a user gaze direction and a user head pose based on sensor data obtained via one or more sensors;
      predicting a region of interest corresponding to an area of the source content based on the identified user gaze direction and the identified user head pose;
      upscaling the area of the source content to a second resolution that is greater than the first resolution;
      generating combined content by combining the upscaled area having the second resolution with a remaining area of the source content having the first resolution; and
      presenting, to the user via the one or more displays, a view of the combined content.
16. The electronic device of item 15, wherein the upscaled area and the remaining area of the source content are separately mapped to a user view space for generating the combined content.
17. The electronic device of item 15, wherein the source content comprises an image that is warped due to wide-angle lens distortion applied to optimize transmission and encoding.
18. The electronic device of item 15, wherein the user gaze direction and the user head pose identify a position of a view of the user respect to at least one prior frame of the source content, and wherein the region of interest is predicted for a next frame of the source content presented subsequent to the least one prior frame.
19. The electronic device of item 18, wherein the at least one prior frame comprises content.
20. The electronic device of item 18, wherein the at least one prior frame is a blank frame without any content.

### Item list 2:

1. A method comprising:
   at an electronic device having a processor and one or more displays:
      obtaining source content at a first resolution for presentation to a user via the one or more displays;
   identifying a user gaze direction and a user head pose based on sensor data obtained via one or more sensors;
   predicting a region of interest corresponding to an area of the source content based on the identified user gaze direction and the identified user head pose;
   upscaling the area of the source content to a second resolution that is greater than the first resolution;
   generating combined content by combining the upscaled area having the second resolution with a remaining area of the source content having the first resolution; and
   presenting, to the user via the one or more displays, a view of the combined content.
2. The method of item 1, wherein the upscaled area and the remaining area of the source content are separately mapped to a user view space for generating the combined content.
3. The method of item 1, wherein the source content comprises an image that is warped due to wide-angle lens distortion applied to optimize transmission and encoding.
4. The method of item 1, wherein the user gaze direction and the user head pose identify a position of a view of the user respect to at least one prior frame of the source content, and wherein the region of interest is predicted for a next frame of the source content presented subsequent to the least one prior frame.
5. The method of item 4, wherein the at least one prior frame comprises content.
6. The method of item 4, wherein the at least one prior frame is a blank frame without any content.
7. The method of item 1, wherein predicting the region of interest is further based on calibration information associated with the one or more sensors.
8. The method of item 1, wherein predicting the region of interest is further based on a context of the source content.
9. The method of item 1, wherein combining the upscaled area with the remaining area of the source content include blending a region between the upscaled area and the remaining area.
10. The method of item 1, wherein information associated with the user gaze direction is excluded from being accessed by systems external to the electronic device.
11. The method of item 1, wherein the area of the source content comprises at least a portion of at least one object.
12. The method of item 1, wherein the source content comprises immersive media.
13. The method of item 1, wherein the source content comprises passthrough content.
14. A non-transitory computer-readable storage medium, storing program instructions executable via one or more processors to perform operations comprising:
   at an electronic device having the one or more processors and one or more displays:
   obtaining source content at a first resolution for presentation to a user via the one or more displays;
      identifying a user gaze direction and a user head pose based on sensor data obtained via one or more sensors;
      predicting a region of interest corresponding to an area of the source content based on the identified user gaze direction and the identified user head pose;
      upscaling the area of the source content to a second resolution that is greater than the first resolution;
      generating combined content by combining the upscaled area having the second resolution with a remaining area of the source content having the first resolution; and
   presenting, to the user via the one or more displays, a view of the combined content.
15. An electronic device comprising:
   one or more displays;
   non-transitory computer-readable storage medium; and
   one or more processors coupled to the non-transitory computer-readable storage medium, wherein the non-transitory computer-readable storage medium comprises program instructions that, when executed on the one or more processors, cause the electronic device to perform operations comprising:
      obtaining source content at a first resolution for presentation to a user via the one or more displays;
      identifying a user gaze direction and a user head pose based on sensor data obtained via one or more sensors;
      predicting a region of interest corresponding to an area of the source content based on the identified user gaze direction and the identified user head pose;
      upscaling the area of the source content to a second resolution that is greater than the first resolution;
      generating combined content by combining the upscaled area having the second resolution with a remaining area of the source content having the first resolution; and
      presenting, to the user via the one or more displays, a view of the combined content.
16. The electronic device of item 15, wherein the upscaled area and the remaining area of the source content are separately mapped to a user view space for generating the combined content.
17. The electronic device of item 15, wherein the source content comprises an image that is warped due to wide-angle lens distortion applied to optimize transmission and encoding.
18. The electronic device of item 15, wherein the user gaze direction and the user head pose identify a position of a view of the user respect to at least one prior frame of the source content, and wherein the region of interest is predicted for a next frame of the source content presented subsequent to the least one prior frame.
19. The electronic device of item 18, wherein the at least one prior frame comprises content.
20. The electronic device of item 18, wherein the at least one prior frame is a blank frame without any content.

### Item list 3:

1. A method comprising:
   at an electronic device having a processor and one or more displays:
   obtaining source content at a first resolution for presentation to a user via the one or more displays;
   identifying a user gaze direction and a user head pose based on sensor data obtained via one or more sensors;
   predicting a region of interest corresponding to an area of the source content based on the identified user gaze direction and the identified user head pose;
   upscaling the area of the source content to a second resolution that is greater than the first resolution;
   generating combined content by combining the upscaled area having the second resolution with a remaining area of the source content having the first resolution; and
   presenting, to the user via the one or more displays, a view of the combined content.
2. The method of item 1, wherein the upscaled area and the remaining area of the source content are separately mapped to a user view space for generating the combined content.
3. The method of item 1, wherein the source content comprises an image that is warped due to wide-angle lens distortion applied to optimize transmission and encoding.
4. The method of item 1, wherein the user gaze direction and the user head pose identify a position of a view of the user respect to at least one prior frame of the source content, and wherein the region of interest is predicted for a next frame of the source content presented subsequent to the least one prior frame.
5. The method of item 4, wherein the at least one prior frame comprises content.
6. The method of item 4, wherein the at least one prior frame is a blank frame without any content.
7. The method of item 1, wherein predicting the region of interest is further based on calibration information associated with the one or more sensors.
8. The method of item 1, wherein predicting the region of interest is further based on a context of the source content.
9. The method of item 1, wherein combining the upscaled area with the remaining area of the source content include blending a region between the upscaled area and the remaining area.
10. The method of item 1, wherein information associated with the user gaze direction is excluded from being accessed by systems external to the electronic device.
11. The method of item 1, wherein the area of the source content comprises at least a portion of at least one object.
12. The method of item 1, wherein the source content comprises immersive media.
13. The method of item 1, wherein the source content comprises passthrough content.
14. A system comprising:
   a processor;
   a computer readable medium storing instructions that when executed by the processor cause the processor to perform operations comprising any one of the methods of items 1-13.
15. A non-transitory computer-readable medium comprising instructions that when executed by a processor cause the processor to perform operations comprising any one of the methods of items 1-13.

The foregoing description, for purpose of explanation, has been described with reference to specific embodiments. However, the illustrative discussions above are not intended to be exhaustive or to limit the invention to the precise forms disclosed. Many modifications and variations are possible in view of the above teachings. The embodiments were chosen and described in order to best explain the principles of the invention and its practical applications, to thereby enable others skilled in the art to best utilize the invention and various embodiments with various modifications as are suited to the particular use contemplated.

## Claims

1. A method comprising:
at an electronic device having a processor and one or more displays:
obtaining source content at a first resolution for presentation to a user via the one or more displays;
identifying a user gaze direction and a user head pose based on sensor data obtained via one or more sensors;
predicting a region of interest corresponding to an area of the source content based on the identified user gaze direction and the identified user head pose;
upscaling the area of the source content to a second resolution that is greater than the first resolution;
generating combined content by combining the upscaled area having the second resolution with a remaining area of the source content having the first resolution; and
presenting, to the user via the one or more displays, a view of the combined content.

2. The method of claim 1, wherein the upscaled area and the remaining area of the source content are separately mapped to a user view space for generating the combined content.

3. The method of claim 1, wherein the source content comprises an image that is warped due to wide-angle lens distortion applied to optimize transmission and encoding.

4. The method of claim 1, wherein the user gaze direction and the user head pose identify a position of a view of the user respect to at least one prior frame of the source content, and wherein the region of interest is predicted for a next frame of the source content presented subsequent to the least one prior frame.

5. The method of claim 4, wherein the at least one prior frame comprises content.

6. The method of claim 4, wherein the at least one prior frame is a blank frame without any content.

7. The method of claim 1, wherein predicting the region of interest is further based on calibration information associated with the one or more sensors.

8. The method of claim 1, wherein predicting the region of interest is further based on a context of the source content.

9. The method of claim 1, wherein combining the upscaled area with the remaining area of the source content include blending a region between the upscaled area and the remaining area.

10. The method of claim 1, wherein information associated with the user gaze direction is excluded from being accessed by systems external to the electronic device.

11. The method of claim 1, wherein the area of the source content comprises at least a portion of at least one object.

12. The method of claim 1, wherein the source content comprises immersive media.

13. The method of claim 1, wherein the source content comprises passthrough content.

14. A system comprising:
a processor;
a computer readable medium storing instructions that when executed by the processor cause the processor to perform operations comprising any one of the methods of claims 1-13.

15. A non-transitory computer-readable medium comprising instructions that when executed by a processor cause the processor to perform operations comprising any one of the methods of claims 1-13.
